# EUROPEAN PATENT APPLICATION

(11) **EP 4 574 559 A1**
(43) Date of publication of application: **25.06.2025**
(21) Application number: 24210147.5
(22) Date of filing: 31.10.2024
(51) Int. Cl.: B60N 2/02, B60N 2/12, B60N 2/16, B60N 2/22, B60N 2/42, B60N 2/433

(54) **RETURN MECHANISM, VEHICLE SEAT AND RETURN METHOD THEREOF**

(30) Priority: 18.12.2023 CN 202311734279; 18.12.2023 CN 202311737402
(71) Applicant: Changchun Zhuojun Automotive Technology Research and Development Co., Ltd., Changchun City, Jilin Province (CN)
(72) Inventor: XU, Haixiang, Changchun City, Jilin Province (CN); XUE, Bingyang, Changchun City, Jilin Province (CN); LIU, Xin, Changchun City, Jilin Province (CN); WANG, Jiadong, Changchun City, Jilin Province (CN)
(74) Representative: Ipside

(57) **Abstract**

The present application relates to a return mechanism, a vehicle seat having the return mechanism and a return method thereof. The vehicle seat includes a seat body, a backrest frame located at back of the vehicle seat and a cushion frame located at cushion of the vehicle seat, the backrest frame being rotationally connected to the cushion frame through angle adjusters located on both sides of the backrest frame, a brushless angle adjustment motor being installed on the backrest frame and being configured to adjust an angle of the angle adjusters, a rear end of the cushion frame being hinged to a slide rail located at bottom of the vehicle seat, and an angle of the cushion frame being adjusted by front angle adjustment mechanisms at a front end of the cushion frame; where a return mechanism is installed between the backrest frame and the angle adjuster, and/or a return mechanism is installed to the front angle adjustment mechanisms, and the return mechanisms are the same in structure. The vehicle seat of the present application has the advantages that through the return mechanism, when collision of vehicle occurs when the seat is in zero-gravity posture and position, the backrest and the cushion can quickly return to their initial positions, which improves the restraint protection on passengers, and reduces the injury caused by the collision.

## Description

### TECHNICAL FIELD

The present application relates to the technical field of zero-gravity vehicle seats, and in particular to a return mechanism for vehicle seat, a vehicle seat having the return mechanism and a return method of the vehicle seat.

### BACKGROUND

Zero-gravity seat is an innovative type of seat that will be widely used in future driving scenarios. When using a zero-gravity seat, a person is in a lying posture and an adjustment range of the seat belt is limited, and thus in the event of an emergency, a restraint force of the seat belt on the body is not as high as that in a normal sitting posture, which generates a safety hazard. A zero-gravity seat having a quick-return mechanism is urgently needed.

### SUMMARY

In view of the above problems, it is an object of the present application to provide a return mechanism for a vehicle seat, a vehicle seat having the return mechanism and a return method of the vehicle seat, which are used for enabling a seat in zero-gravity posture to return to an appropriate angle of backrest and an appropriate angle of cushion according to a predetermined route through the return mechanism, after a collision occurs, realizing the optimization of the sitting posture to improve the restraint protection on passengers, so as to overcome the shortcomings in the prior art.

To achieve the above object, the present application adopts the technical solutions as follows.

According to a first aspect, the present application provides a return mechanism for a vehicle seat, the vehicle seat including: a seat body, a backrest frame, and a cushion frame, the backrest frame being rotationally connected to the cushion frame through angle adjusters located on both sides of the backrest frame, a rear end of the cushion frame being hinged to a slide rail located at bottom of the vehicle seat, and an angle of the cushion frame being adjusted by a pair of front angle adjustment mechanisms at front end of the cushion frame, where the return mechanism includes: a rotating bracket power source, a rotating bracket, a spring, an unlocking bracket, a toothed plate bracket, and an energy absorber, where the rotating bracket is movably engaged with the unlocking bracket, teeth of the unlocking bracket are engaged with teeth of the toothed plate bracket, one side of the energy absorber is fixedly connected to the toothed plate bracket, one end of the spring is fixedly connected to the rotating bracket, and the rotating bracket power source is configured to push the rotating bracket to overcome a pulling force of the spring to rotate, so that the rotating bracket drives the unlocking bracket to rotate to enable the teeth of the unlocking bracket to separate from the teeth of the toothed plate bracket; and where the return mechanism is installed between the backrest frame and the angle adjuster and/or the return mechanism is installed on the pair of front angle adjustment mechanisms.

In an embodiment of the present application, when the return mechanism is installed between the backrest frame and the angle adjuster, the rotating bracket and the unlocking bracket are both rotationally connected to the backrest frame, the other end of the spring is fixedly connected to the backrest frame, the other side of the energy absorber is fixedly connected to the backrest frame, and a side of the toothed plate bracket away from the energy absorber is fixedly connected to the angle adjuster, and the energy absorber is configured to be unlocked when collision of vehicle occurs and enable the toothed plate bracket and the backrest frame to rotate relative to each other, so that the backrest frame separates from the toothed plate bracket and the backrest frame returns to its initial position.

In an embodiment of the present application, the front angle adjustment mechanism includes a lifting motor, a first lifting link hinged to a driving screw of the lifting motor, and a second lifting link hinged to the front end of the cushion frame, and when the return mechanism is installed to the pair of front angle adjustment mechanisms, both sides of the return mechanism are connected to the first lifting link and the second lifting link respectively, the lifting motor is configured to push the first lifting link by the driving screw, the first lifting link drives the return mechanism to rotate, and during rotating, the return mechanism drives the second lifting link to push the cushion frame to rotate around a hinge shaft at rear end of the cushion frame.

In an embodiment of the present application, the rotating bracket and the unlocking bracket are rotationally connected to the first lifting link, the other end of the spring is fixedly connected to the first lifting link, the other side of the energy absorber is fixedly connected to the first lifting link, and a side of the toothed plate bracket away from the energy absorber is fixedly connected to the second lifting link; and the energy absorber is configured to be unlocked after collision of vehicle occurs to enable the toothed plate bracket and the first lifting link to rotate relative to each other, so that the first lifting link separates from the toothed plate bracket and the cushion frame returns to its initial position.

In an embodiment of the present application, the rotating bracket power source includes a trigger and a trigger push column connected with the trigger, and the trigger is configured to push the rotating bracket to rotate through the trigger push column.

In an embodiment of the present application, the rotating bracket includes: a rotating bracket body, a snap-in protrusion located on one end of circumference of the rotating bracket body, a spring connecting hook located on the other end of the circumference of the rotating bracket body, and a shaft hole located in middle of the rotating bracket body, where the spring connecting hook is configured to connect with the spring, the snap-in protrusion is configured to be snapped into a snap-in groove of the unlocking bracket.

In an embodiment of the present application, the unlocking bracket includes: an unlocking bracket body, a snap-in groove provided at upper end of the unlocking bracket body, a toothed groove provided at lower end of the unlocking bracket body, and a shaft hole located on one side of the unlocking bracket body, and the toothed groove is engaged with the teeth on an outer circumference of the toothed plate bracket.

In an embodiment of the present application, the first lifting link includes: a base bracket and a hinge lug located on one side of the base bracket, the hinge lug is hinged to the driving screw of the lifting motor, and the base bracket is hinged to a crossbeam of the slide rail located at bottom of the vehicle seat; and where the second lifting link includes: a return bracket and a support rod hinged to the return bracket, the return bracket is fixedly connected to the toothed plate bracket, and a free end of the support rod is hinged to the cushion frame.

According to a second aspect, the present application provides a vehicle seat having a return mechanism, including: a seat body, a backrest frame located at back of the vehicle seat, and a cushion frame located at a cushion of the vehicle seat, where the backrest frame is rotationally connected to the cushion frame through angle adjusters on both sides of the backrest frame, a brushless angle adjustment motor is installed on the backrest frame and is configured to adjust an angle of the angle adjusters, a rear end of the cushion frame is hinged to a slide rail located at bottom of the vehicle seat, and an angle of the cushion frame is adjusted by a pair of front angle adjustment mechanisms at front end of the cushion frame, where the front angle adjustment mechanisms include a lifting motor, a first lifting link hinged to a driving screw of the lifting motor, and a second lifting link hinged to the front end of the cushion frame;
where the return mechanism is the return mechanism according to the first aspect.

According to a third aspect, the present application provides a return method for a vehicle seat, applied to the vehicle seat according to the second aspect, specifically including the following steps:
Step S 1: when a vehicle system detects a pre-collision signal, outputting, by the vehicle system, a control signal to enable a brushless angle adjustment motor to quickly adjust an angle adjuster, so that the backrest frame returns to its initial position; and
Step S2: when collision of vehicle actually occurs and the vehicle system outputs a collision signal, if it is identified by a seat position sensor that the backrest frame and/or the cushion frame of the vehicle seat have not returned to their initial positions, outputting, by the vehicle system, a control signal to the return mechanism to enable the backrest frame to be unlocked and separated from the angle adjuster by the return mechanism so that the backrest frame returns to its initial position, and/or to enable the first lifting link to be unlocked and separated from the second lifting link by the return mechanism so that the cushion frame returns to its initial position.

In an embodiment of the present application, when the return mechanism is installed between the backrest frame and the angle adjuster, enabling the backrest frame to be unlocked and separated from the angle adjuster by the return mechanism in step S2 includes the following steps:
Step S31: outputting, by the vehicle system, a signal to the trigger, so that the trigger pushes by the trigger push column the rotating bracket to rotate around its hinge shaft, the rotating bracket pushes the unlocking bracket to rotate around its hinge shaft, and the unlocking bracket separates from the teeth of the toothed plate bracket during rotating, realizing a first unlocking of the backrest frame from the toothed plate bracket;
Step S32: performing, by the energy absorber, a second unlocking, where the energy absorber is unlocked during the collision, so as to separate the toothed plate bracket fixedly connected to the angle adjuster from the backrest frame, so that the backrest frame returns to its initial position; and
Step S33: after the backrest frame has returned to its initial position, pulling, by the spring, the rotating bracket to return to its initial position, the rotating bracket driving the unlocking bracket to engage with the toothed plate bracket, so that the toothed plate bracket fixedly connected to the angle adjuster locks with the backrest frame.

In an embodiment of the present application, when the return mechanism is installed to the pair of front angle adjustment mechanisms, enabling the first lifting link to be unlocked and separated from the second lifting link by the return mechanism in step S2 includes the following steps:
Step S41: outputting, by the vehicle system, a signal to the trigger, so that the trigger pushes, by the trigger push column, the rotating bracket to rotate around its hinge shaft, the rotating bracket pushes the unlocking bracket to rotate around its hinge shaft, and the unlocking bracket separates from the teeth of the toothed plate bracket during rotating, realizing a first unlocking of the first lifting link from the toothed plate bracket;
Step S42: performing, by the energy absorber, a second unlocking, where the energy absorber is unlocked during the collision, so as to separate the toothed plate bracket fixedly connected to the second lifting link from the first lifting link, so that the cushion frame connected to the second lifting link returns to its initial position; and
Step S43: after the cushion frame is returned to its initial position, pulling, by the spring, the rotating bracket to return to its initial position, the rotating bracket driving the unlocking bracket to engage with the toothed plate bracket, so that the toothed plate bracket locks the second lifting link with the first lifting link.

The advantages and positive effects of the present application are as follows.

1. In the present application, the angle adjuster is driven by a brushless angle adjustment motor, so that the backrest frame and/or the cushion frame are adjusted to their initial positions as soon as possible within a limited reaction time since the vehicle recognizes the pre-collision.

2. In the present application, a return mechanism is provided to quickly return the backrest frame and/or the cushion frame that have not returned to their initial positions, which improves the safety of vehicle seat so that when a collision occurs when the vehicle seat is in the zero-gravity position, the backrest and/or cushion can quickly return to their initial positions, thereby improving the restraint protection for the passengers.

3. In the present application, when the return mechanism is installed between the backrest frame and the angle adjuster, after a collision of vehicle occurs, the return mechanism can unlock and separate the backrest frame from the angle adjuster, so that the backrest frame can quickly return to its initial position under the impact of the collision, and also the backrest frame can be locked and fixed by the return mechanism after returning to its initial position.

4. In the present application, when the return mechanism is installed to the front angle adjustment mechanism of the cushion frame, the cushion frame can also realize quick return to its initial position in addition to being angle-adjustable.

5. The return mechanisms installed at the backrest and cushion in the present application have the same structure and principle, and they both adopt a two-stage unlocking method. The backrest frame and the angle adjuster are connected together by a limiting connecting bracket composed of a rotating bracket, an unlocking bracket and a toothed plate bracket, and the separation and unlocking of the backrest frame and the angle adjuster are realized by separating and unlocking the unlocking bracket and toothed plate bracket via a trigger. Since the above unlocked backrest frame and the angle adjuster are still connected together through the energy absorber, when the force of the collision of the vehicle is greater than the resistance of the two friction discs of the energy absorber, the energy absorber is unlocked to achieve relative rotation between the backrest frame and the angle adjuster. Similarly, the first lifting link and the second lifting link of the return mechanism are also connected or separated by the limiting connecting bracket and the energy absorber.

### BRIEF DESCRIPTION OF DRAWINGS

FIG. 1 is a schematic diagram of an overall structure of a vehicle seat of the present application.
FIG. 2 is a side view of an overall structure of a vehicle seat of the present application.
FIG. 3 is a schematic diagram of an installation structure of a return mechanism, a seat frame, and an angle adjuster of the present application.
FIG. 4 is an exploded view of an overall structure of the return mechanism in FIG. 3.
FIG. 5 is a schematic diagram of a locked state of the return mechanism in FIG. 3.
FIG. 6 is a schematic diagram of an unlocked state of the return mechanism in FIG. 3.
FIG. 7 is a schematic diagram of a cushion at an initial position according to the present application.
FIG. 8 is a schematic diagram of a cushion at a lifting position according to the present application.
FIG. 9 is one schematic diagram of a return mechanism installed at a cushion frame according to the present application.
FIG. 10 is another schematic diagram of a return mechanism installed at a cushion frame according to the present application.
FIG. 11 is a schematic diagram of a locked state of a return mechanism installed at a cushion frame according to the present application.
FIG. 12 is a schematic diagram of an unlocked state of a return mechanism installed at a cushion frame according to the present application.
FIG. 13 is an exploded view of a return mechanism installed at a cushion frame according to the present application.
FIG. 14 is an exploded view of an energy absorber of the present application.
FIG. 15 is a schematic diagram of an installation structure of a rotating bracket and an unlocking bracket of the present application.

### Reference numerals:

backrest frame 1, cushion frame 2, angle adjuster 3, brushless angle adjustment motor 4, return mechanism 5, trigger 501, trigger push column 502, rotating bracket 503, spring 504, unlocking bracket 505, toothed plate bracket 506, energy absorber 507, hinge shaft 6, slide rail 7, front angle adjustment mechanism 8, lifting motor 801, driving screw 802, first lifting link 803, second lifting link 804, base bracket 805, hinge lug 806, return bracket 807, support rod 808, return mechanism 9, trigger 901, trigger push column 902, rotating bracket 903, spring 904, unlocking bracket 905, toothed plate bracket 906, energy absorber 907, left friction disc 10, right friction disc 11, arc-shaped piece 12, rotating bracket body 13, snap-in protrusion 14, spring connecting hook 15, shaft hole 16, unlocking bracket body 17, snap-in groove 18, toothed groove 19, shaft hole 20, first hinge shaft a, second hinge shaft b, third hinge shaft c, fourth hinge shaft d, and fifth hinge shaft e.

### DESCRIPTION OF EMBODIMENTS

In the following description, for descriptive purpose, numerous specific details are set forth in order to provide a thorough understanding of one or more embodiments. However, it is evident that the embodiments may be implemented without these specific details. In examples, well-known structures and devices are shown in block diagram form in order to facilitate describing one or more embodiments.

Embodiment 1

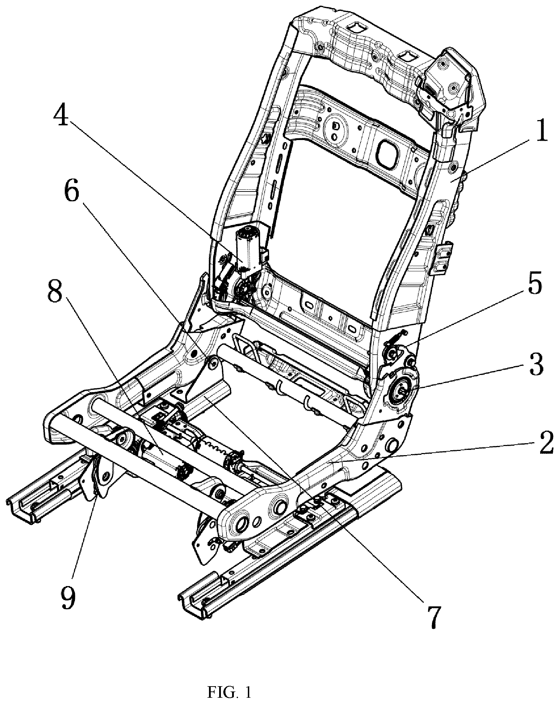

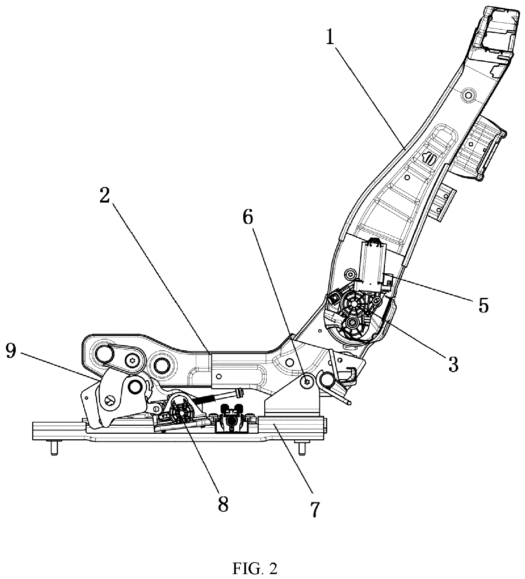

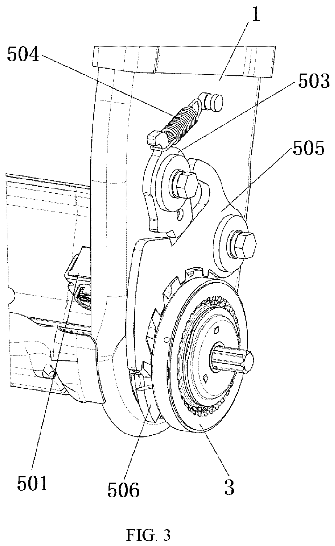

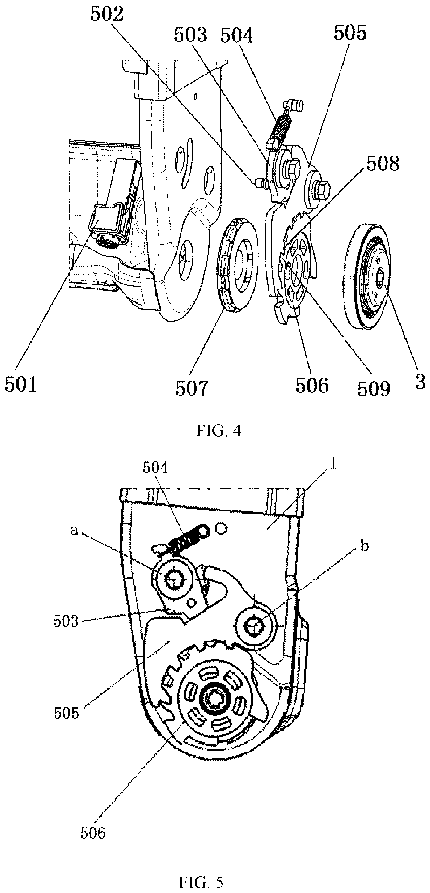

Referring to FIG. 1 to FIG. 5, the present embodiment provides a return mechanism for a vehicle seat, the vehicle seat including: a seat body, a backrest frame 1, and a cushion frame 2; where the backrest frame 1 is rotationally connected to the cushion frame 2 through angle adjusters located on both sides of the backrest frame 1, and a return mechanism 5 is installed between the backrest frame 1 and the angle adjuster 3 and is configured to enable the backrest frame 1 to be quickly returned to its initial position, and the return mechanism 5 includes: a trigger 501 installed near a rotating shaft of the backrest frame 1, a rotating bracket 503 rotationally connected to the backrest frame 1 and pushed to rotate by a trigger push column 502 driven by the trigger 501, an unlocking bracket 505 rotationally connected to the backrest frame 1 and movably engaged with the rotating bracket 503, a toothed plate bracket 506 engaged with the unlocking bracket 505 through a tooth, and an energy absorber 507 for connecting the toothed plate bracket 506 with the backrest frame 1. One side of the energy absorber 507 is fixedly connected to the backrest frame 1, and the other side thereof is fixedly connected to the toothed plate bracket 506. A side of the toothed plate bracket 506 away from the energy absorber 507 is fixedly connected to the angle adjuster 3. The rotating bracket 503 is provided with a spring 504 connected to the backrest frame 1. Before collision of the vehicle occurs, teeth of the unlocking bracket 505 are engaged with teeth of the toothed plate bracket 506, so that the unlocking bracket 505 and the toothed plate bracket 506 rotate synchronously. When the collision of the vehicle occurs and it is detected by a sensor of a vehicle system that the seat is not in its initial position, the vehicle system outputs a signal to the trigger 501, the trigger 501 pushes, by the trigger push column 502, the rotating bracket 503 to overcome a pulling force of the spring 504 and to rotate. The rotating bracket 503 drives the unlocking bracket 505 to rotate and separates the teeth of the unlocking bracket 505 from the teeth of the toothed plate bracket 506. The energy absorber 507 is configured to be unlocked after the collision of the vehicle to enable the toothed plate bracket 506 and the backrest frame 1 to rotate relative to each other, so that the backrest frame 1 is unlocked from the toothed plate bracket 506, and the backrest frame 1 returns to its initial position quickly.

In the present embodiment, a power source of the rotating bracket includes a trigger 501 and a trigger push column 502, or any power mechanism that can drive the rotating bracket 503 to rotate.

### Embodiment 2

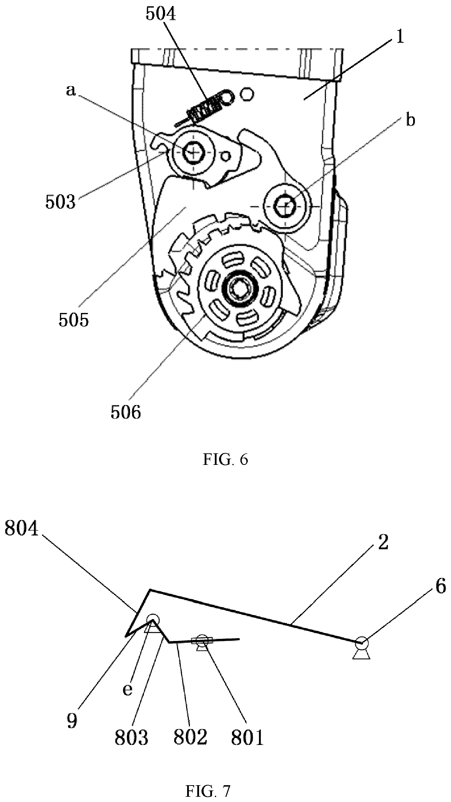

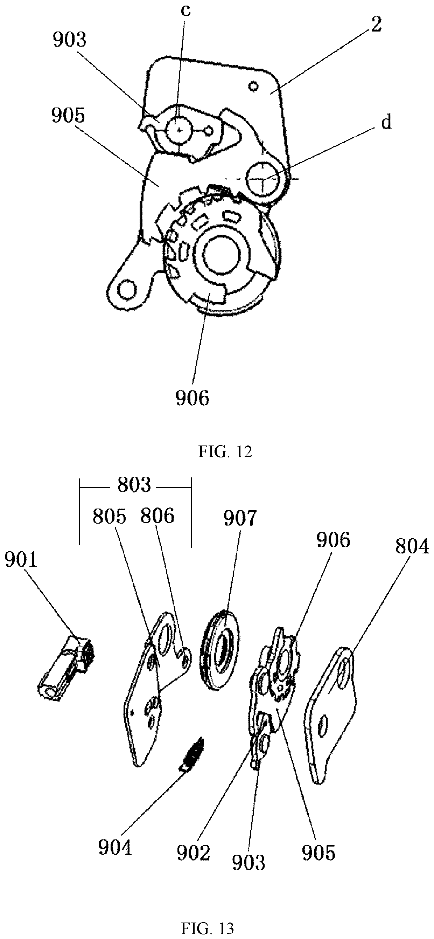

Referring to FIG. 7 to FIG. 13, the present embodiment provides a return mechanism for a vehicle seat, the vehicle seat including: a seat body, a backrest frame 1 and a cushion frame 2, where a rear end of the cushion frame 2 is hinged to a slide rail 7 located at bottom of the vehicle seat through a hinge shaft 6, an angle of the cushion frame 2 is adjusted through a pair of front angle adjustment mechanisms 8 at front end of the cushion frame 2, and a return mechanism 9 for quick return of the cushion frame 2 is installed on the pair of front angle adjustment mechanisms 8, where the front angle adjustment mechanism 8 includes a lifting motor 801, a first lifting link 803 hinged with a driving screw 802 of the lifting motor 801, and a second lifting link 804 hinged with the front end of the cushion frame 2, both sides of the return mechanism 9 are connected with the first lifting link 803 and the second lifting link 804 respectively, the lifting motor 801 pushes the first lifting link 803 through the driving screw 802, the first lifting link 803 drives the return mechanism 9 to rotate, and during rotation, the return mechanism 9 drives the second lifting link 804 to push the cushion frame 2 to rotate around the hinge shaft 6 of the cushion frame 2; the return mechanism 9 includes: a trigger 901 installed near the cushion frame 2, a trigger push column 902 connected with the trigger 901, a rotating bracket 903 rotationally connected with the first lifting link 803 and pushed to rotate by the trigger push column 902, an unlocking bracket 905 rotationally connected with the first lifting link 803 and movably engaged with the rotating bracket 903, a toothed plate bracket 906 engaged with the unlocking bracket 905 through teeth, and an energy absorber 907 for connecting the toothed plate bracket 906 with the first lifting link 803, one side of the energy absorber 907 is fixedly connected with the first lifting link 803, and the other side thereof is fixedly connected with the toothed plate bracket 906, and one side of the toothed plate bracket 906 away from the energy absorber 907 is fixedly connected with the second lifting link 804, the rotating bracket 903 is provided with a spring 904 connected to the first lifting link 803. Before collision of the vehicle occurs, teeth of the unlocking bracket 905 are engaged with teeth of the toothed plate bracket 906, so that the unlocking bracket 905 and the toothed plate bracket 906 rotate synchronously. When the collision of the vehicle occurs and it is detected by a sensor of a vehicle system that the seat is not in its initial position, the vehicle system outputs a signal to the trigger 901, and the trigger 901 pushes by the trigger push column 902 the rotating bracket 903 to overcome a pulling force of the spring 904 and to rotate. The rotating bracket 903 drives the unlocking bracket 905 to rotate and enables the teeth of the unlocking bracket 905 to be separated from the teeth of the toothed plate bracket 906 and the first lifting link 803 to be unlocked from the toothed plate bracket 906. The energy absorber 907 is configured to be unlocked after the collision of the vehicle to enable the toothed plate bracket 906 to rotate relative to the first lifting link 803, so that the second lifting link 804 fixedly connected with the toothed plate bracket 906 drives the cushion frame 2 to quickly return.

### Embodiment 3

Referring to FIG. 1 to FIG. 11, the present embodiment provides a vehicle seat, including: a seat body, a backrest frame 1 located at back of the vehicle seat, and a cushion frame 2 located at a cushion of the seat, where the backrest frame 1 is rotationally connected to the cushion frame 2 through angle adjusters 3 located on both sides of the backrest frame 1, two brushless angle adjustment motors 4 for adjusting angles of the angle adjusters 3 are installed on both sides of the backrest frame 1, a rear end of the cushion frame 2 is hinged by a hinge shaft 6 to a slide rail 7 located at bottom of the vehicle seat, an angle of the cushion frame 2 is adjusted through two front angle adjustment mechanisms 8 symmetrically installed at front end of the cushion frame 2, a return mechanism 5 for quick return of the backrest frame 1 is installed between the backrest frame 1 and the angle adjuster 3 and/or a return mechanism 9 for quick return of the cushion frame 2 is installed on the front angle adjustment mechanism 8, where the return mechanism 5 has the same structure as the return mechanism 9.

Referring to FIG. 1 to FIG. 5, the return mechanism 5 in the present embodiment includes: a trigger 501, a trigger push column 502, a rotating bracket 503, a spring 504, an unlocking bracket 505, a toothed plate bracket 506, and an energy absorber 507. The rotating bracket 503 and the unlocking bracket 505 are both rotationally connected by a rotating shaft to the backrest frame 2 at a position close to the angle adjuster 3. The rotating bracket 503 is movably engaged with the unlocking bracket 505. The teeth of the unlocking bracket 505 are engaged with the teeth of the toothed plate bracket 506. One side of the energy absorber 507 is fixedly connected to the backrest frame 1, and the other side thereof is fixedly connected to the toothed plate bracket 506. A side of the toothed plate bracket 506 away from the energy absorber 507 is fixedly connected to the angle adjuster 3. One end of the spring 504 is fixedly connected to the backrest frame 1, and the other end thereof is fixedly connected to the rotating bracket 503. The energy absorber 507 is configured to enable the toothed plate bracket 506 to rotate relative to the backrest frame 1 and thus unlock them when collision of vehicle occurs. The trigger 501 pushes by the trigger push column 502 the rotating bracket 503 to overcome a pulling force of the spring 504 to rotate, so that the rotating bracket 503 drives the unlocking bracket 505 to rotate and separates the teeth of the unlocking bracket 505 from the teeth of the toothed plate bracket 506, and thus the backrest frame 1 is unlocked from the toothed plate bracket 506. The energy absorber 507 is configured to be unlocked after the collision of the vehicle to enable the toothed plate bracket 506 to rotate relative to the backrest frame 1, so that the backrest frame 1 returns to its initial position quickly.

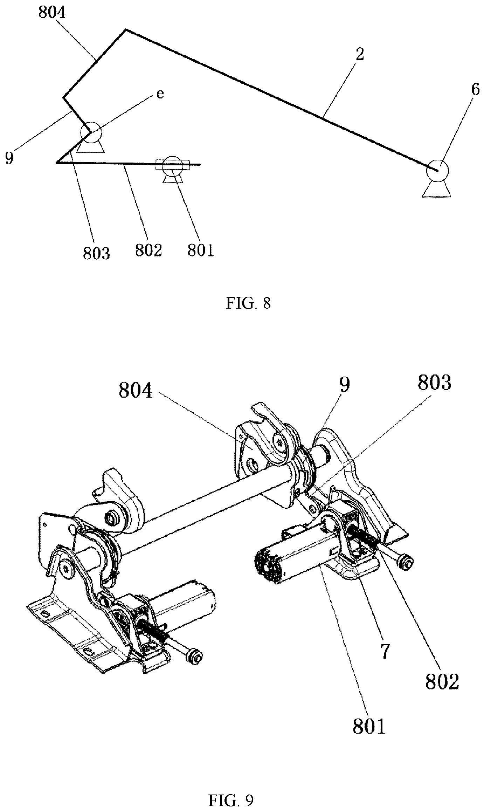

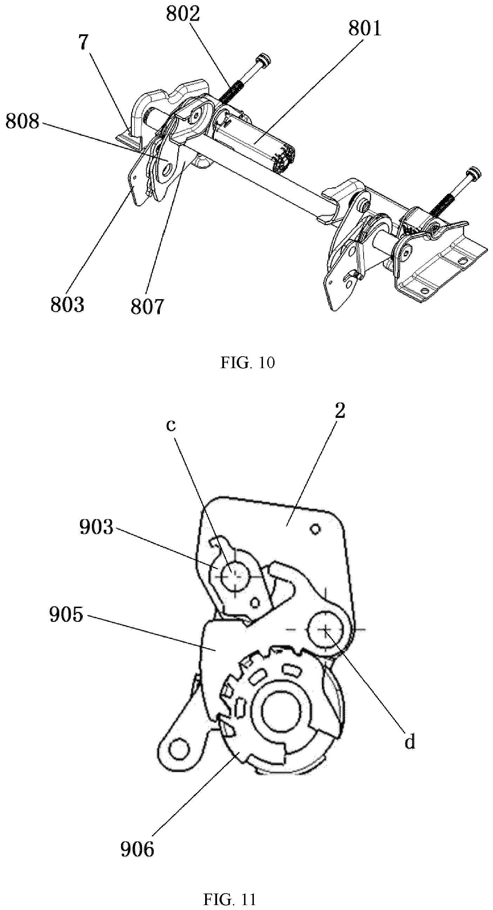

Referring to FIG. 9 and FIG. 10, the front angle adjustment mechanism 8 in the present embodiment includes: a lifting motor 801, a first lifting link 803 hinged to a driving screw 802 of the lifting motor 801, and a second lifting link 804 hinged to front end of the cushion frame 2. Both sides of the return mechanism 9 are connected to the first lifting link 803 and the second lifting link 804 respectively. The lifting motor 801 drives the first lifting link 803 to rotate around a fifth hinge shaft e through the driving screw 802. The first lifting link 803 drives the return mechanism 9 to rotate. During rotating, the return mechanism 9 drives the second lifting link 804 to push the cushion frame 2 to rotate around the hinge shaft 6 of the cushion frame 2. The first lifting link 803 includes: a base bracket 805, and a hinge lug 806 located on one side of the base bracket 805, the hinge lug 806 is hinged to the driving screw 802 of the lifting motor 801, and the base bracket 805 is hinged by the fifth hinge shaft e to a crossbeam of the slide rail 7 at bottom of the vehicle seat. The second lifting link 804 includes: a return bracket 807 and a support rod 808 hinged to the return bracket 807. The return bracket 807 is fixedly connected to the toothed plate bracket 906, and a free end of the support rod 808 is hinged to the cushion frame 2.

Referring to FIG. 7 to FIG. 13, the return mechanism 9 in the present embodiment includes: a trigger 901, a trigger push column 902, a rotating bracket 903, a spring 904, an unlocking bracket 905, a toothed plate bracket 906, and an energy absorber 907. The rotating bracket 903 and the unlocking bracket 905 are rotationally connected to the base bracket 805 of the first lifting link 803. The rotating bracket 903 is movably engaged with the unlocking bracket 905. The teeth of the unlocking bracket 905 are engaged with the teeth of the toothed plate bracket 906. One side of the energy absorber 907 is fixedly connected to the base bracket 805 of the first lifting link 803, and the other side thereof is fixedly connected to the toothed plate bracket 906. A side of the toothed plate bracket 906 away from the energy absorber 907 is fixedly connected to the return bracket 807 of the second lifting link 804. One end of the spring 904 is fixedly connected to the base bracket 805 of the first lifting link 803, and the other side thereof is fixedly connected to the rotating bracket 903. The energy absorber 907 is configured to be unlocked after the collision of the vehicle to enable the toothed plate bracket 906 and the first lifting link 803 to rotate relative to each other. The trigger 901 pushes by the trigger push column 902 the rotating bracket 903 to overcome a pulling force of the spring 904 to rotate, the rotating bracket 903 drives the unlocking bracket 905 to rotate and separates the teeth of the unlocking bracket 905 from the teeth of the toothed plate bracket 906, thereby unlocking the first lifting link 803 from the toothed plate bracket 906. The energy absorber 807 is configured to be unlocked after the collision of the vehicle to enable the toothed plate bracket 906 to rotate relative to the first lifting link 803, so that the cushion frame 2 returns to its initial position quickly.

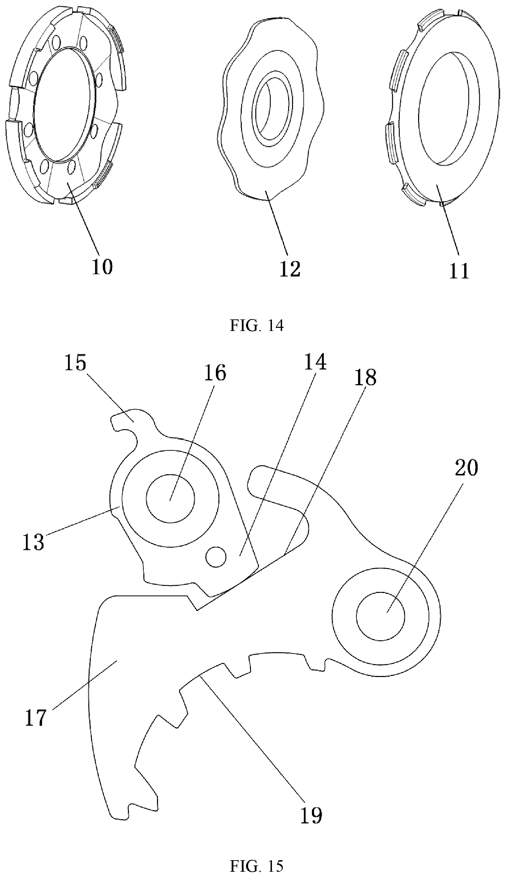

Referring to FIG. 15, the rotating bracket 503 and the rotating bracket 903 in the present embodiment both include: a rotating bracket body 13, a snap-in protrusion 14 located on one end of a circumference of the rotating bracket body 13, a spring connecting hook 15 located on the other end of the circumference of the rotating bracket body 13, and a shaft hole 16 located in middle of the rotating bracket body 13, the spring connecting hook 15 is used to connect with the spring 504 or the spring 904, the snap-in protrusion 14 is snapped into a snap-in groove of the unlocking bracket 505 or the unlocking bracket 905, the unlocking bracket 505 and the unlocking bracket 905 both include: an unlocking bracket body 17, a snap-in groove 18 provided at upper end of the unlocking bracket body 17, a toothed groove 19 provided at lower end of the unlocking bracket body 17, and a shaft hole 20 located on one side of the unlocking bracket body 17, the toothed groove 19 is engaged with the teeth on an outer circumference of the toothed plate bracket.

Referring to FIG. 14, further, the energy absorber 507 and the energy absorber 907 in the present embodiment both include: a left friction disc 10, a right friction disc 11, and an arc-shaped piece 12 located between the left friction disc 10 and the right friction disc 11, and arc-shaped waves on both sides of the arc-shaped piece 12 correspond to wave surfaces on the inner sides of the left friction disc 10 and the right friction disc 11, where the arc-shaped piece 12 is disposable, and a new energy absorber or arc-shaped piece 12 is required after each damage.

A working principle of return of the vehicle seat is as below: when the backrest frame 1 and the cushion frame 2 stay at a position other than their initial positions and the vehicle system detects a pre-collision signal, the backrest frame 1 first drives the angle adjuster 3 to return to its initial position through the brushless angle adjustment motor 4 with a faster rotation speed, and at the same time, the cushion frame 2 returns to its initial position through the lifting motor 801, and before the vehicle collides, when a position sensor of a seat system detects that the backrest frame 1 and the cushion frame 2 have fully returned to their initial positions, the return mechanisms are no longer started; and when the position sensor of the seat system detects that the backrest frame 1 and/or the cushion frame 2 have not fully returned to their initial positions, the return mechanism 5 and/or the return mechanism 9 are started. Where the return mechanism 5 and the return mechanism 9 have the same structure and principle, and both adopt a two-stage unlocking method. Specifically, in the case of the return mechanism 5, the backrest frame 1 and the angle adjuster 3 are connected by a limiting connecting bracket composed of the rotating bracket 503, the unlocking bracket 505 and the toothed plate bracket 506, and when a trigger signal is received, the trigger 501 drives by the trigger push column 502 the rotating bracket 503 to rotate, and the rotating bracket 503 separates and unlocks the unlocking bracket 505 from the toothed plate bracket 506, thereby realizing the separation and unlocking of the backrest frame 1 from the angle adjuster 3; since the unlocked backrest frame 1 and the angle adjuster 3 are still connected by the energy absorber 507, when the force of the collision of the vehicle is greater than the resistance of the left friction disc 10 and the right friction disc 11 of the energy absorber 507, the arc-shaped piece 12 of the energy absorber 507 is broken and the energy absorber 507 is unlocked, thereby realizing the relative rotation between the backrest frame 1 and the angle adjuster 3. Similarly, the first lifting link 803 and the second lifting link 804 of the return mechanism 9 are also connected or separated by using a limiting connecting bracket and an energy absorber.

### Embodiment 4

The present embodiment provides a return method for the above vehicle seat, specifically including the following steps:
Step S 1: when a vehicle system detects a pre-collision signal, outputting, by the vehicle system, a control signal to enable the brushless angle adjustment motor 4 to quickly adjust the angle adjuster 3, so that the backrest frame 1 quickly returns to its initial position; and
Step S2: when collision of vehicle actually occurs and the vehicle system outputs a collision signal, if it is identified by a seat position sensor that the backrest frame 1 and/or the cushion frame 2 of the vehicle seat have not returned to their initial positions (the reason is that the duration before the collision is less than the duration for the brushless angle adjustment motor to completely return to its initial position), outputting, by the vehicle system, a control signal to the return mechanism 5 and/or the return mechanism 9, to enable the backrest frame 1 to be unlocked and separated from the angle adjuster 3 by the return mechanism 5, thereby causing the backrest frame 1 to return to its initial position quickly; and/or to enable the first lifting link 803 to be unlocked and separated from the second lifting link 804 by the return mechanism 9, thereby causing the cushion frame 2 to return to its initial position quickly.

When the return mechanism 5 is installed between the backrest frame 1 and the angle adjuster 3, enabling the backrest frame 1 to be unlocked and separated from the angle adjuster 3 by the return mechanism 5 in step S2 includes the following steps:
Step S31: outputting, by the vehicle system, a signal to the trigger 501, so that the trigger 501 pushes, by the trigger push column 502, the rotating bracket 503 to rotate around its first hinge shaft *a*, the rotating bracket 503 pushes the unlocking bracket 505 to rotate around its second hinge shaft b, and the unlocking bracket 505 during rotating separates from the teeth of the toothed plate bracket 506, realizing a first unlocking of the backrest frame 1 from the toothed plate bracket 506;
Step S32: performing, by the energy absorber 507, a second unlocking, where the energy absorber 507 is unlocked during the collision, so as to separate the toothed plate bracket 506 fixedly connected to the angle adjuster 3 from the backrest frame 1, so that the backrest frame 1 quickly returns to its initial position; and
Step S33: after the backrest frame 1 has returned to its initial position quickly, pulling, by the spring 504, the rotating bracket 503 to return to its initial position, the rotating bracket 503 driving the unlocking bracket 505 to engage with the toothed plate bracket 506, so that the toothed plate bracket 506 fixedly connected to the angle adjuster 3 locks with the backrest frame 1.

When the return mechanism 9 is installed to the pair of front angle adjustment mechanisms 8, enabling the first lifting link 803 to be unlocked and separated from the second lifting link 804 by the return mechanism 9 in step S2 includes the following steps:
Step S41: outputting, by the vehicle system, a signal to the trigger 901, so that the trigger 901 pushes, by the trigger push column 902, the rotating bracket 903 to rotate around its third hinge shaft c, the rotating bracket 903 pushes the unlocking bracket 905 to rotate around its fourth hinge shaft *d,* and the unlocking bracket 905 during rotating separates from the teeth of the toothed plate bracket 906, realizing a first unlocking of the first lifting link 803 from the toothed plate bracket 906;
Step S42: performing, by the energy absorber 907, a second unlocking, where the energy absorber 907 is unlocked during the collision, so as to separate the toothed plate bracket 906 fixedly connected to the second lifting link 804 from the first lifting link 803, so that the cushion frame 2 connected to the second lifting link 804 is quickly returned to its initial position; and
Step S43: after the cushion frame 2 quickly returns to its initial position, pulling, by the spring 904, the rotating bracket 903 back to its initial position, the rotating bracket 903 driving the unlocking bracket 905 to engage with the toothed plate bracket 906, so that the toothed plate bracket 906 locks the second lifting link 804 with the first lifting link 803.

The above are only specific embodiments of the present application, but the protection scope of the present application is not limited thereto. Any skilled in the art who is familiar with the technical field can easily think of changes or substitutions within the technical scope disclosed by the present application, and these changes or substitutions should fall in the protection scope of the present application. Therefore, the protection scope of the present application should be subject to the protection scope of the claims.

## Claims

1. A return mechanism (5, 9) for a vehicle seat, the vehicle seat comprising: a seat body, a backrest frame (1), and a cushion frame (2), the backrest frame (1) being rotationally connected to the cushion frame (2) through angle adjusters (3) located on both sides of the backrest frame (1), a rear end of the cushion frame (2) being hinged to a slide rail (7) located at bottom of the vehicle seat, and an angle of the cushion frame (2) being adjusted by a pair of front angle adjustment mechanisms (8) at front end of the cushion frame (2), wherein the return mechanism (5, 9) comprises: a rotating bracket power source, a rotating bracket (503, 903), a spring (504, 904), an unlocking bracket (505, 905), a toothed plate bracket (506, 906), and an energy absorber (507, 907), wherein the rotating bracket (503, 903) is movably engaged with the unlocking bracket (505, 905), teeth of the unlocking bracket (505, 905) are engaged with teeth of the toothed plate bracket (506, 906), one side of the energy absorber (507, 907) is fixedly connected to the toothed plate bracket (506, 906), one end of the spring (504, 904) is fixedly connected to the rotating bracket (503, 903), and the rotating bracket power source is configured to push the rotating bracket (503, 903) to overcome a pulling force of the spring (504, 904) to rotate, so that the rotating bracket (503, 903) drives the unlocking bracket (505, 905) to rotate to enable the teeth of the unlocking bracket (505, 905) to separate from the teeth of the toothed plate bracket (506, 906); and wherein the return mechanism (5) is installed between the backrest frame (1) and the angle adjuster (3) and/or the return mechanism (9) is installed to the pair of front angle adjustment mechanisms (8).

2. The return mechanism (5) according to claim 1, wherein when the return mechanism (5) is installed between the backrest frame (1) and the angle adjuster (3), the rotating bracket (503) and the unlocking bracket (505) are both rotationally connected to the backrest frame (1), the other end of the spring (504) is fixedly connected to the backrest frame (1), the other side of the energy absorber (507) is fixedly connected to the backrest frame (1), and a side of the toothed plate bracket (506) away from the energy absorber (507) is fixedly connected to the angle adjuster (3), and the energy absorber (507) is configured to be unlocked when collision of vehicle occurs, to enable the toothed plate bracket (506) and the backrest frame (1) to rotate relative to each other, so that the backrest frame (1) separates from the toothed plate bracket (506) and the backrest frame (1) returns to its initial position.

3. The return mechanism (9) according to claim 1, wherein the front angle adjustment mechanism (8) comprises a lifting motor (801), a first lifting link (803) hinged to a driving screw (802) of the lifting motor (801), and a second lifting link (804) hinged to the front end of the cushion frame (2), and when the return mechanism (9) is installed to the pair of front angle adjustment mechanisms (8), both sides of the return mechanism (9) are connected to the first lifting link (803) and the second lifting link (804), respectively, the lifting motor (801) is configured to push the first lifting link (803) by the driving screw (802), the first lifting link (803) drives the return mechanism (9) to rotate, and the return mechanism (9) drives the second lifting link (804) to push the cushion frame (2) to rotate around a hinge shaft at rear end of the cushion frame (2) during rotating.

4. The return mechanism (9) according to claim 3, wherein the rotating bracket (903) and the unlocking bracket (905) are rotationally connected to the first lifting link (803), the other end of the spring (904) is fixedly connected to the first lifting link (803), the other side of the energy absorber (907) is fixedly connected to the first lifting link (803), and a side of the toothed plate bracket (906) away from the energy absorber (907) is fixedly connected to the second lifting link (804), and the energy absorber (907) is configured to be unlocked after collision of vehicle occurs to enable the toothed plate bracket (906) and the first lifting link (803) to rotate relative to each other, so that the first lifting link (803) separates from the toothed plate bracket (906) and the cushion frame (2) returns to its initial position.

5. The return mechanism (5, 9) according to claim 1, wherein the rotating bracket power source comprises a trigger (501, 901) and a trigger push column (502, 902) connected with the trigger (501, 901), and the trigger (501, 901) is configured to push the rotating bracket (503, 903) to rotate through the trigger push column (502, 902).

6. The return mechanism (5, 9) according to claim 1, wherein the rotating bracket (503, 903) comprises: a rotating bracket body (13), a snap-in protrusion located on one end of circumference of the rotating bracket body (13), a spring connecting hook (15) located on the other end of the circumference of the rotating bracket body (13), and a shaft hole (16) located in middle of the rotating bracket body (13), wherein the spring connecting hook (15) is configured to connect with the spring (504, 904), the snap-in protrusion (14) is configured to be snapped into a snap-in groove (18) of the unlocking bracket (505, 905).

7. The return mechanism (5, 9) according to claim 1, wherein the unlocking bracket (505, 905) comprises: an unlocking bracket body (17), a snap-in groove (18) provided at upper end of the unlocking bracket body (17), a toothed groove (19) provided at lower end of the unlocking bracket body (17), and a shaft hole (20) located on one side of the unlocking bracket body (17), and the toothed groove (19) is engaged with teeth on an outer circumference of the toothed plate bracket (506, 906).

8. The return mechanism (9) according to claim 3, wherein the first lifting link (803) comprises: a base bracket (805) and a hinge lug (806) located on one side of the base bracket (805), the hinge lug (806) is hinged to the driving screw (802) of the lifting motor (801), and the base bracket (805) is hinged to a crossbeam of the slide rail (7) located at bottom of the vehicle seat; and wherein the second lifting link (804) comprises: a return bracket (807) and a support rod (808) hinged to the return bracket (807), the return bracket (807) is fixedly connected to the toothed plate bracket (906), and a free end of the support rod (808) is hinged to the cushion frame (2).

9. A vehicle seat, comprising: a seat body, a backrest frame (1) located at back of the vehicle seat, and a cushion frame (2) located at a cushion of the vehicle seat, wherein the backrest frame (1) is rotationally connected to the cushion frame (2) through angle adjusters (3) on both sides of the backrest frame (1), a brushless angle adjustment motor (4) is installed on the backrest frame (1) and is configured to adjust an angle of the angle adjusters (3), a rear end of the cushion frame (2) is hinged to a slide rail (7) located at bottom of the vehicle seat, and an angle of the cushion frame (2) is adjusted by a pair of front angle adjustment mechanisms (8) at front end of the cushion frame (2), wherein the front angle adjustment mechanism (8) comprises a lifting motor (801), a first lifting link (803) hinged to a driving screw (802) of the lifting motor (801), and a second lifting link (804) hinged to the front end of the cushion frame (2);
wherein the vehicle seat comprises the return mechanism (5,9) according to any one of claims 1 to 8

10. A return method for a vehicle seat, applied to the vehicle seat according to claim 9, comprising the following steps:
Step S 1: when a vehicle system detects a pre-collision signal, outputting, by the vehicle system, a control signal to enable a brushless angle adjustment motor to adjust an angle adjuster, so that the backrest frame returns to its initial position; and
Step S2: when collision of vehicle actually occurs and the vehicle system outputs a collision signal, if it is identified by a seat position sensor that the backrest frame and/or the cushion frame of the vehicle seat have not returned to their initial positions, outputting, by the vehicle system, a control signal to the return mechanism to enable the backrest frame to be unlocked and separated from the angle adjuster by the return mechanism so that the backrest frame returns to its initial position, and/or to enable the first lifting link to be unlocked and separated from the second lifting link by the return mechanism so that the cushion frame returns to its initial position.

11. The return method for a vehicle seat according to claim 10, wherein when the return mechanism is installed between the backrest frame and the angle adjuster, enabling the backrest frame to be unlocked and separated from the angle adjuster by the return mechanism in step S2 comprises the following steps:
Step S31: outputting, by the vehicle system, a signal to the trigger, so that the trigger pushes by the trigger push column the rotating bracket to rotate around its hinge shaft, the rotating bracket pushes the unlocking bracket to rotate around its hinge shaft, and the unlocking bracket separates from the teeth of the toothed plate bracket during rotating, realizing a first unlocking of the backrest frame from the toothed plate bracket;
Step S32: performing, by the energy absorber, a second unlocking, wherein the energy absorber is unlocked during the collision, so as to separate the toothed plate bracket fixedly connected to the angle adjuster from the backrest frame, so that the backrest frame returns to its initial position; and
Step S33: after the backrest frame has returned to its initial position, pulling, by the spring, the rotating bracket to return to its initial position, the rotating bracket driving the unlocking bracket to engage with the toothed plate bracket, so that the toothed plate bracket fixedly connected to the angle adjuster locks with the backrest frame.

12. The return method for a vehicle seat according to claim 10, wherein when the return mechanism is installed to the pair of front angle adjustment mechanisms, enabling the first lifting link to be unlocked and separated from the second lifting link by the return mechanism in step S2 comprises the following steps:
Step S41: outputting, by the vehicle system, a signal to the trigger, so that the trigger pushes by the trigger push column the rotating bracket to rotate around its hinge shaft, the rotating bracket pushes the unlocking bracket to rotate around its hinge shaft, and the unlocking bracket separates from the teeth of the toothed plate bracket during rotating, realizing a first unlocking of the first lifting link from the toothed plate bracket;
Step S42: performing, by the energy absorber, a second unlocking, wherein the energy absorber is unlocked during the collision, so as to separate the toothed plate bracket fixedly connected to the second lifting link from the first lifting link, so that the cushion frame connected to the second lifting link returns to its initial position; and
Step S43: after the cushion frame is returned to its initial position, pulling, by the spring, the rotating bracket to return to its initial position, the rotating bracket driving the unlocking bracket to engage with the toothed plate bracket, so that the toothed plate bracket locks the second lifting link with the first lifting link.
